# EUROPEAN PATENT SPECIFICATION

(11) **EP 0 347 735 B1**
(45) Date of publication and mention of the grant of the patent: **04.05.1994**
(21) Application number: 89110784.9
(22) Date of filing: 14.06.1989
(51) Int. Cl.: B60R 13/06

(54) **Sealing strip for motorvehicles**
Dichtungselement für Kraftfahrzeuge
Bande d'étanchéité pour véhicules automobiles

(30) Priority: 24.06.1988 IT 2109288
(43) Date of publication of application: 27.12.1989
(73) Proprietor: SAIAG INDUSTRIA S.p.A., I-10073 Cirie' (Torino) (IT)
(72) Inventor: Mancosu, Federico, I-20135 - Milan (IT); Daminelli, Giovanni, I-20099 Sesto S. Giovanni Milan (IT)
(74) Representative: Quinterno, Giuseppe

(56) References cited:
- FR-A- 2 579 927

## Description

The present invention refers to a sealing strip for motor vehicles according to the preamble of claim 1 and of the type known e.g. from FR-A-2 579 927.

The known strips suitable for this use comprise two structural shapes of polymeric material connected together by a continuous rib of constant dimensions and polymeric material too, whose function is only that of connecting together the two structural shapes.

Of these two structural shapes, the former has the function of anchoring the strip to the motor vehicle body and comprises means for securing said strip to the said body, while the latter has the function of providing a sealing of the strip and is compressed against the contour of the doors, tail doors and the like when these latter close the opening of the motor vehicle body.

Usually, said second structural shape is in the form of a tubular body of foamed material and elastically deformable. In this description, the term "tubular body" means a body provided with a cavity in a radially innermost position with respect to said body, the section of which can have any whatsoever configuration; therefore the contours of the inner cavity and of the outer surface of the tubular body can be, for example, circular, even not concentric, elliptical, polygonal with rectilinear or curvilinear sides equal or different from one another and combinations of said geometrical configurations.

The problem that appears in the strips in question is to guarantee a reliable and efficient sealing at any point between door, tail door and the like and the contour of the motor vehicle body to insulate the interior compartment of this latter toward the water infiltrations and the noise caused by outer sources and to require at the same time the least possible effort by the user to lead said doors, tail doors and the like into closing position.

The solution of this problem imposes the mediation of two opposite requirements.

In fact, to ensure a good sealing it is necessary that the strip exerts a fairly high and uniform specific pressure on the contour of the door of a motor vehicle and this turns into the need of having a fairly high force applied on the strip by the door in closing position; this is clearly in contrast with the requirement of the user to exert the least possible effort and consequently to apply the least possible force to close the door itself.

The solution of the problem in question is complicated by the fact that in motor vehicle having the door in closing position, the distance between the contour of the opening and the contour of the door closing said opening, is not constant, but is variable also in a relatively considerable measure not only between the various openings of the body of the same motor vehicle, but also in the openings of motor vehicles of a different models.

In order to solve the above mentioned problem, the known strips foresee to vary the dimensions of the second tubular structural shape of foamed material.

More precisely, in the known strips the second tubular structural shape of foamed material is variable along the strip in its outer diametral dimensions, thickness and thickness profile.

The drawbacks of the above described known strips derive from the fact that the second structural shape of foamed material has dimensions variable along the strip as just set forth hereinbefore.

In fact, it is very difficult and require the use of very complicated and consequently very delicate production equipments to realize with precision on industrial scale variations of the outer diameter, thickness and distribution of thicknesses along the tubular structural shape, besides being of foamed material.

The above because the variations in question must be carried out in fairly reduced portions and quite near one another, since the total length of a strip usually does not exceed three meters, and because said variations that permit the solution of the problem when are effected contemporaneously with the foaming of the material produce the risk of altering the foaming process just in consequence of said variations of dimensions.

It is also known from Doc. FR-A-2579927 to provide a process for manufacturing a sealing strip having a sealing portion and a middle portion of constant thickness for the whole longitudinal profile of the sealing strip in which the height, connecting together the anchoring portion to the sealing portion, is variable to allow the sealing portion to arrive outwardly at the edge of the door and of the car body since the rib on which the anchoring portion of the sealing strip is mounted does not develop at constant distance from the outer profile of the car body.
In the above sealing strip, not the middle portion made of foamed material having poor mechanical characteristic, but only the sealing portion of constant cross-section is elastically deformed as the door is being closed against the edge of the car body.
Nevertheless, the sealing portion, being of constant thickness, cannot compensate variations of distance between the contour of the door in closing position and the edge of the car body.

The consequence of the foregoing turns in practice into a not sufficient safety by the known strips of solving always in a reliable way on industrial scale the previously stated problem connected with the sealing strips of motorvehicles.

The aim of the present invention is a sealing strip for motorvehicle which solves in a reliable way on industrial scale said problem simultaneously achieving effective sealing and facilitated closure of the door.

This aim is achieved by the features of the characterizing portion of claim 1.

Further embodiments are referred to in the dependent claims 2 to 10.

The present invention will be better understood by the following detailed description made by way of non limiting example with reference to the figures of the attached sheet of drawings in which:
- FIGURE 1: shows schematically an opening of a motorvehicle body and the contour occupied by the edge of the door in said opening along which the strip must guarantee the sealing;
- FIGURES 2 and 3: show sections of one same strip according to the invention at the positions represented by lines II-II and III-III of figure 1, respectively;
- FIGURE 4: is a section of a sealing strip according to the invention in an alternative embodiment.

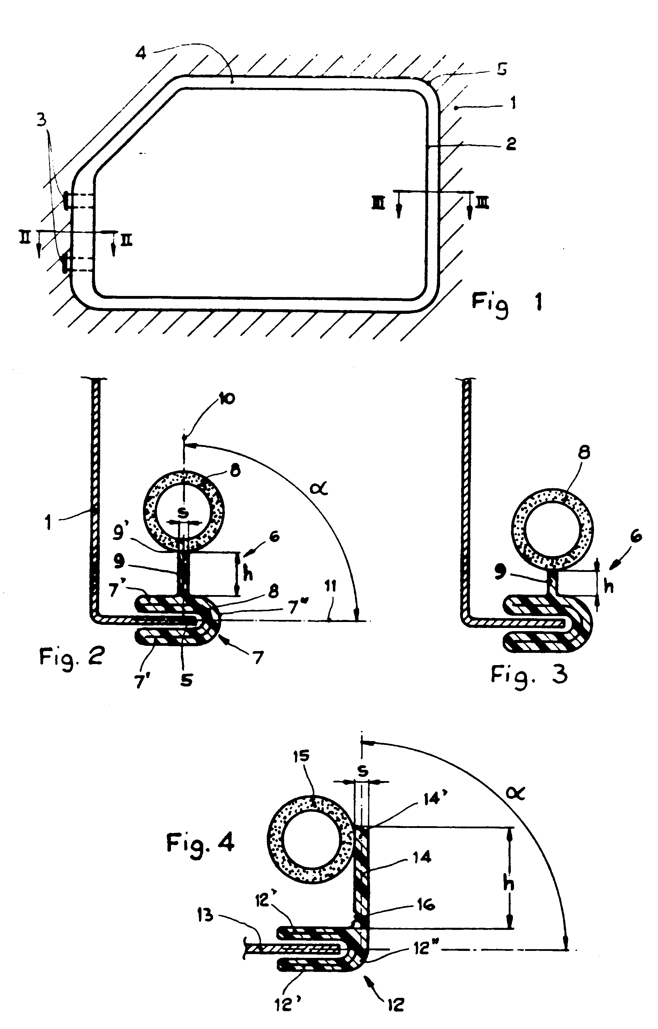

Figure 1 shows one opening of a motor vehicle body 1, the contour 2 occupied by the edge of the door (not shown) when said door is in closing position and the position of the hinges 3 connecting the door with the body 1.

As shown in figure 1, the space 4 delimited between the contour 5 of the opening and the contour 2 of the edge of the door in closing position has variable dimensions and is occupied by a sealing strip according to the invention not shown in figure 1.

In its more general aspects a sealing strip according to the invention comprises a first structural shape for its anchorage to the contour of the opening of the motorvehicle body, a second sealing structural shape, which is elastically deformable and whose section does not change dimension and configuration along the entire strip and a continuous rib of polymeric material for connecting the two structural shapes.

For the purposes of the present invention, the main element is that the continuous rib of polymeric material for connecting the two structural shapes, has variations of geometrical dimensions and/or geometrical configurations and/or physical properties at least along a portion of the strip.

In a strip according to the present invention the first structural shape can be any one, as well as the means contained or associated thereto, for the anchorage to the motor vehicle body.

Also the second deformable sealing structural shape for a strip according to the invention can be any one on condition that its section, configuration and deformability maintain practically constant and unchanged along the whole strip.

For instance the second deformable structural shape can be constituted by a round bar having any configuration in section, of elastically deformable material, in particular foamed elastomeric material, or can be a tubular body with a wall of elastic material, for instance compact elastomeric material whose cavity can be devoid of materials or in case be filled with foamed material or preferably the second structural shape is in the form of a tubular body of foamed elastomeric material of section, cofiguration and dimensions invariable along the whole structural shape.

Figures 2 and 3 show two sections made in different positions of one same particular embodiment of a strip 6 according to the invention and precisely sections made at the positions represented by lines II-II and III-III of figure 1, respectively, to which the strip 6 is applied.

As shown in figures 2 and 3 the strip 6 comprises a first anchoring structural shape 7 having a U configuration in section that embraces the contour 5 (figure 1) of an opening of the motor vehicle body 1 and presses thereon.

The first anchoring structural shape 7 is of elastomeric material and contains a sheet 8 which extends along the flanges 7' and the core 7'' of the U configuration of said first structural shape.

A continuous rib 9 compact polymeric material, in particular compact elastomeric material, projects from one of the two flanges 7' of the structural shape.

At the end 9' of the rib 9, farthest from the first structural shape 7, there is a second elastically deformable structural shape 8 constituted by a tubular body having the wall of foamed elastomeric material.

As it appears from the figures 2, 3 that represent a particular strip according to the invention applied to realize the sealing in the particular embodiment shown in figure 1, the rib 9 has only the height variable along the structural shape in reply to the variations of width of the space 4.

In particular the height "h" of the rib 9 of the strip 6 applied to the body 1 assumes the maximum value at the hinges 3 connecting the door with the body and the minimum value at the farther positions from said hinges 3.

According to an alternative embodiment not shown of a strip according to the present invention the rib, besides having a variable height has also the section "s" variable along its development and at least the section "s" assumes the minimum value in proximity and/or near the hinge and the maximum value in the farthest position from the said hinge.

In a further not shown embodiment of a strip according to the present invention, the rib besides being variable in the height "h" and section "s", is also variable in the angle α that in the figure 1 is of 90 degrees, and is formed by the longitudinal median plane of the rib 9 (whose outline is represented by the dashed line 10 in the drawing) with respect to the longitudinal median plane of the first structural shape 7 (whose outline is represented by the dashed line 11 in the drawing).

In another not shown embodiment of a strip according to the present invention, the rib besides having the height "h", section "s", and angle α variable along the strip, has also variable physical properties, in particular the modulus "m" of elasticity of the constituting compact polymeric material, for instance this being obtained by embedding in the material constituting the rib or applying on at least one surface of this latter different quantities of natural or synthetic fibers in different portions of the same.

In the further not shown embodiment of a strip according to the invention, the rib besides being variable along its own development in the height "h", section "s", angle of inclination α and modulus "m", has on at least one of its faces and for at least a portion of the strip at least a groove whose depth and width can be variable along the strip.

Further embodiments of a strip according to the invention which are not illustrated with drawings are those in which the rib is variable at least for a portion of its development in at least any one of its own dimensional, configuration or physical characteristics chosen among height "h", dimensions of the section "s", angle of inclination α, modulus "m" of elasticity of the material constituting said rib,number of grooves on the rib, position of the grooves on the rib, and/or variability of the width and depth of said grooves along the rib and variations of the relative position of the rib with respect to the two structural shapes joined together by this latter along the strip.

By considering that the profile of the distance existing between the contour of the opening of a motor vehicle body and the contour of the door or the like closing said opening is variable in a different way not only between the different openings of one same model of motor vehicle, but also in the openings of different models of motor vehicles, a technician of the art is able to choose for any case among the above mentioned characteristics of the rib of a strip according to the invention that or those which must be varied and the way in which said variation must take place to obtain contemporaneously a uniform pressure between strip and edge of the motorvehicle door or the like that guarantees the sealing and the least possible effort by the user to shut said door or the like.

Figure 4 shows in section another particular embodiment of a strip according to the invention.

As appears from figure 4, the strip has a first U structural shape 12 of polymeric material, in particular elastomeric material containing a sheet 12'''. Said first U structural shape 12 comprises two flanges 12' and a core 12'' for anchoring the strip to the motor vehicle body at the edge 13 of an opening of the motor vehicle and to this effect the flanges 12' of the U structural shape 12 clamp between them said edge 13.

A rib 14 of compact polymeric material, in particular elastomeric material, project from the core 12'' of the U structural shape 12.

At the end 14' of the rib 14 there is a tubular structural shape 15 of foamed material, whose configuration and section are constant along the entire strip.

The rib 14 is substantially tangent to both the structural shapes 12 and 15 and these latter are on the same part of said rib; moreover said rib has height "h", section "s" and modulus "m" of elasticity of the material constituting the rib and angle α of 90 degrees constant along the entire strip.

The main characteristics of the strip of figure 4 is the presence of a groove 16 in the rib 14 that extends for a portion of the strip along which the depth and width of the groove 16 are variable.

In particular, the depth and width of the groove 16 assume the maximum value in proximity and/or at the hinges connecting the door or the like with the motorvehicle body and the minimum value, also nul, in the farthest position from said door or the like.

From the description of the previously stated several embodiments and from the following considerations, it is evident how by a sealing strip according to the invention the previously cited aimed purposes are achieved.

In a strip according to the present invention the second elastically deformable structural shape apt to go in contact with the edge of the motor vehicle door to realize on it the sealing, has configuration and dimensions practically invariable along the entire strip.

Therefore, especially in the case in which said elastically deformable structural shape is a tubular body of foamed material, the constancy of inner and outer diametral dimensions, thickness and distribution of the thickness of the material eliminates any possible risk of alterations that may take place in the manufacture of the sealing strip during the foaming process of the constituting material.

Moreover the absence of dimensional variations in the elastically deformable structural shape eliminates the operative complications involved in the manufacture of the structural shape.

In a strip according to the invention the variations necessary along the same in order to solve the problem to guarantee the sealing in association with the least possible effort by the user to shut the door are carried out only in the rib of compact polymeric material which, unlike the foamed material, does not present any risk of suffering alterations and on which the variations especially the geometrical ones, for instance the forming of grooves in a variable number and dimensions along the rib and the varying of thickness of the rib, are of particularly elementary execution, do not present any difficulty of execution and do not require the use of complicated and delicate equipments for their realization.

## Claims

1. Sealing strip (6) for motor vehicle suitable for being anchored to the edge of openings of motor vehicle bodies for sealing the contours of the door, said sealing strip occupying the space delimited between the contour of the opening and the contour of the edge of the door in closing position, said sealing strip comprising:
a first structural U-shape (7) provided with two flanges (12') for clamping between them the edge of the opening of the motorvehicle body;
a second elastically deformable sealing structural shape (8) whose sections perpendicular to its own longitudinal axis are identical along the entire strip, said longitudinal axis of said second structural shape being substantially parallel to a longitudinal axis of said structural U-shape;
and a continuous rib (9) connecting together said two structural shapes (7,8), said continuous rib presenting a geometrical configuration defined by two faces and a height "h", a thickness "s", an angle of inclination " α " formed by the longitudinal median plane of the rib with the longitudinal median plane of the first structural U-shape and a physical property defined by the modulus of elasticity " m ", said rib having a longitudinal axis substantially parallel to said longitudinally axis of said first structural shape and said longitudinal axis of said second structural shape,
said strip being characterized by the fact that said rib comprises means for simultaneously achieving effective sealing by said strip and facilitated closure of said doors in response to application of low closure force, said means comprising at least one portion of said rib including variations along said longitudinal axis of said rib with respect to at least one of geometric configuration, dimensions and physical property.

2. Sealing strip according to claim 1 characterized by the fact that the variation of dimensions of the rib is choosen between a variation of height "h" and/or section "s" of the rib itself.

3. Sealing strip according to claim 1, characterized by the fact that the height of the rib connecting the two structural shapes assumes the maximum value in proximity and/or near the hinges (3) connecting the door, tail door and the like with the motor-vehicle body and the minimum value in the farthest position from said hinges (3).

4. Sealing strip according to claim 1, characterized by the fact that the thickness "s" of the rib connecting the two structural shapes assumes the minimum value in proximity and/or near the hinges (3) connecting the door, tail door and the like with the motorvehicle body and the maximum value in the farthest position from said hinges (3).

5. Sealing strip according to claim 1, characterized by the fact that the variation of the geometrical configuration of the rib is the presence in at least one of its face of at least a longitudinal groove (16).

6. Sealing strip according to claim 5 characterized by the fact that the longitudinal groove has depth and/or width variable along the rib.

7. Sealing strip according to claim 6 characterized by the fact that the depth and/or the width of the groove assumes the maximum value in proximity of and/or at the hinges connecting the door, tail door or the like with the motor-vehicle body and the minimum value in the farthest position from said hinges.

8. Sealing strip according to claim 1, characterized by the fact that the variation of the geometrical configurations of the rib is a variation of inclination of the angle "α" formed by the longitudinal median plane of said rib with the longitudinal median plane of the first structural shape.

9. Sealing strip according to claim 1, characterized by the fact that the modulus "m" of elasticity of the material forming the rib is variable along the rib itself.

10. Sealing strip according to claim 1, characterized by the fact that the rib (14) is substantially tangent to both the structural shapes (15, 16), these latter being on the same part of the rib.

## Patentansprüche

1. Dichtungsleiste (6) für Kraftfahrzeuge, die dazu geeignet ist, am Rand von Öffnungen von Kraftfahrzeugkarosserien verankert zu werden, um die Konturen der Tür abzudichten, wobei die Dichtungsleiste den zwischen der Kontur der Öffnung und der Kontur des Rands der Tür in Schließstellung begrenzten Raum einnimmt, wobei die Dichtungsleiste umfaßt:
eine erste strukturelle U-Form (7), die mit zwei Flanschen (12') versehen ist, um zwischen diesen den Rand der Öffnung der Kraftfahrzeugkarosserie einzuspannen;
eine zweite, elastisch deformierbare, abdichtende strukturelle Form (8), deren zu ihrer eigenen Langsachse senkrechte Schnitte längs der gesamten Leiste identisch sind, wobei die Längsachse der zweiten strukturellen Form im wesentlichen parallel zu einer Längsachse der strukturellen U-Form ist;
und eine durchgehende Rippe (9), die die Zwei strukturellen Formen (7, 8) miteinander verbindet, wobei die durchgehende Rippe eine durch zwei Seiten, eine Höhe "h", eine Dicke "s" und einen von der Längsmittelebene der Rippe mit der Längsmittelebene der ersten strukturellen U-Form gebildeten Neigungswinkel "α" festgelegte geometrische Gestalt und eine durch den Elastizitätsmodul "m" festgelegte physikalische Eigenschaft zeigt, wobei die Rippe eine Längsachse hat, die im wesentlichen parallel zur Längsachse der ersten strukturellen Form und zur Längsachse der zweiten strukturellen Form ist,
wobei die Leiste durch die Tatsache gekennzeichnet ist, daß die Rippe Mittel zur gleichzeitigen Erzielung einer wirksamen Abdichtung durch die Leiste und, ansprechend auf die Anwendung einer geringen Schließkraft, eines erleichterten Schließens der Türen umfaßt, wobei die Mittel umfassen, daß wenigstens ein Abschnitt der Rippe längs der Längsachse der Rippe Variationen hinsichtlich geometrischer Gestalt und/oder Abmessungen und/oder physikalischer Eigenschaft umfaßt.

2. Dichtungsleiste nach Anspruch 1,
gekennzeichnet durch die Tatsache, daß die Variation dar Abmessungen der Rippe zwischen einer Variation der Höhe "h" und/oder des Querschnitts "s" der Rippe selbst ausgewählt ist.

3. Dichtungsleiste nach Anspruch 1,
gekennzeichnet durch die Tatsache, daß die Höhe der die zwei strukturellen Formen verbindenden Rippe den Maximalwert in unmittelbarer Umgebung und/oder nahe der Scharniere (3), welche die Tür, Hecktür und dergleichen mit der Kraftfahrzeugkarosserie verbinden, und den Minimalwert an der von den Scharnieren (3) entferntesten Stelle einnimmt.

4. Dichtungsleiste nach Anspruch 1,
gekennzeichnet durch die Tatsache, daß die Dicke "s" der die zwei strukturellen Formen verbindenden Rippe den Minimalwert in unmittelbarer Umgebung und/oder nahe der Scharniere (3), welche die Tür, Hecktür und dergleichen mit der Kraftfahrzeugkarosserie verbinden, und den Maximalwert an der von den Scharnieren (3) entferntesten Stelle einnimmt.

5. Dichtungsleiste nach Anspruch 1,
gekennzeichnet durch die Tatsache, daß die Variation der geometrischen Gestalt der Rippe das Vorhandensein wenigstens einer Längsnut (16) in wenigstens einer ihrer Seiten ist.

6. Dichtungsleiste nach Anspruch 5,
gekennzeichnet durch die Tatsache, daß die Längsnut eine längs der Rippe variable Tiefe und/oder Breite aufweist.

7. Dichtungsleiste nach Anspruch 6,
gekennzeichnet durch die Tatsache, daß die Tiefe und/oder die Breite der Nut den Maximalwert in unmittelbarer Umgebung der und/oder bei den Scharnieren, welche die Tür, Hecktür oder dergleichen mit der Kraftfahrzeugkarosserie verbinden, und den Minimalwert an der von der Scharnieren entferntesten Stelle einnimmt.

8. Dichtungsleiste nach Anspruch 1,
gekennzeichnet durch die Tatsache, daß die Variation der geometrischen Gestalten der Rippe eine Variation der Neigung des von der Längsmittelebene der Rippe mit der Längsmittelebene der ersten strukturellen Form gebildeten Winkels "α" ist.

9. Dichtungsleiste nach Anspruch 1,
gekennzeichnet durch die Tatsache, daß dar Elastizitätsmodul "m" des die Rippe bildenden Materials längs der Rippe selbst variabel ist.

10. Dichtungsleiste nach Anspruch 1,
gekennzeichnet durch die Tatsache, daß die Rippe (14) im wesentlichen tangential zu beiden strukturellen Formen (15, 16) ist, wobei diese letzteren sich an demselben Teil der Rippe befinden.

## Revendications

1. Bande d'étanchéité (6) pour véhicules automobiles, appropriée pour être ancrée au bord des baies des caisses de véhicules automobiles pour former un joint étanche sur les contours de la porte, ladite bande d'étanchéité occupant l'espace délimité entre le contour de la baie et le contour du bord de la porte dans la position de fermeture, ladite bande d'étanchéité comprenant :
une première formation structurelle en U (7) munie de deux ailes (12') destinées à serrer entre elles le bord de la baie de la caisse du véhicule automobile ;
une deuxième formation structurelle d'étanchéité (8) élastiquement déformable, dont les sections perpendiculaires à son axe longitudinal sont identiques sur toute la longueur de la bande, ledit axe longitudinal de ladite deuxième formation structurelle étant sensiblement parallèle à l'axe longitudinal de ladite formation structurelle en U ;
et une nervure continue (9) qui relie l'une à l'autre ces formations structurelles (7, 8), ladite nervure continue présentant une configuration géométrique définie par deux faces et une hauteur "h", une épaisseur "s", un angle d'inclinaison "." formé par le plan médian longitudinal de la nervure avec le plan médian longitudinal de la première formation structurelle en U, et une propriété physique définie par le module d'élasticité "m", ladite nervure ayant un axe longitudinal sensiblement parallèle à l'axe longitudinal de ladite première formation structurelle et audit axe longitudinal de ladite deuxième formation structurelle,
ladite bande étant caractérisée en ce que ladite nervure comprend des moyens servant à assurer simultanément une fermeture étanche au moyen de ladite bande et une fermeture plus facile desdites portes en réponse à l'application de faibles forces de fermeture, lesdits moyens comprenant au moins une partie de ladite nervure qui présente des variations le long dudit axe longitudinal de ladite nervure, qui ont trait à au moins une des caractéristiques suivantes : la configuration géométrique, les dimensions et la propriété physique.

2. Bande d'étanchéité selon la revendication 1, caractérisée en ce que la variation des dimensions de la nervure est choisie entre une variation de hauteur "h" et/ou de section "s" de la nervure.

3. Bande d'étanchéité selon la revendication 1, caractérisée en ce que la hauteur de la nervure qui relie les deux formations structurelles possède la valeur maximale à proximité et/ou dans la région des charnières (3) qui assemblent la porte, le hayon ou équivalent à la caisse du véhicule automobile, et la valeur minimale dans la position la plus éloignée desdites charnières (3).

4. Bande d'étanchéité selon la revendication 1, caractérisée en ce que l'épaisseur "s" de la nervure qui relie les deux formations structurelles possède la valeur minimale à proximité et/ou au droit des charnières (3) qui assemblent la porte, le hayon ou équivalent à la caisse du véhicule automobile et la valeur maximale dans la position la plus éloignée desdites charnières (3).

5. Bande d'étanchéité selon la revendication 1, caractérisée en ce que la variation de la configuration géométrique de la nervure est la présence d'au moins une rainure longitudinale (16) dans au moins une de ses faces.

6. Bande d'étanchéité selon la revendication 5, caractérisée en ce que la rainure longitudinale a une profondeur et/ou une largeur qui varient sur la longueur de la nervure.

7. Bande d'étanchéité selon la revendication 6, caractérisée en ce que la profondeur et/ou la largeur de la nervure possèdent la valeur maximale à proximité et/ou au droit des charnières qui assemblent la porte, le hayon ou équivalent à la caisse du véhicule automobile et la valeur minimale dans la position la plus éloignée desdites charnières.

8. Bande d'étanchéité selon la revendication 1, caractérisée en ce que la variation des configurations géométriques de la nervure est une variation de l'inclinaison de l'angle "α" formé par le plan médian longitudinal de ladite nervure avec le plan médian longitudinal de la première formation structurelle.

9. Bande d'étanchéité selon la revendication 1, caractérisée en ce que le module d'élasticité "m" de la matière formant la nervure varie sur la longueur de cette nervure.

10. Bande d'étanchéité selon la revendication 1, caractérisée en ce que la nervure (14) est sensiblement tangente aux deux formations structurelles (15, 16), ces dernières étant situées du même côté de la nervure.
